# EUROPEAN PATENT APPLICATION

(11) **EP 1 306 192 A1**
(43) Date of publication of application: **02.05.2003**
(21) Application number: 02079101.8
(22) Date of filing: 02.10.2002
(51) Int. Cl.: B29C 49/42

(54) **Apparatus for gripping/holding parisons in blow-moulding machines and associated machine with said apparatus**

(30) Priority: 24.10.2001 IT MI20012233
(71) Applicant: Magic MP S.p.A., Seregno (Milano) (IT)
(72) Inventor: Giacobbe, Ferruccio, Monza (MI) (IT)
(74) Representative: Raimondi, Alfredo, Dott. Ing. Prof.

(57) **Abstract**

Apparatus for gripping/holding parisons (2,2a) for blow-moulding machines (3), comprising support means (1) which can be connected to the devices for transporting the parisons, inside the machine and movable therewith, means (10) for gripping the neck (2a) of the parison (2) which are constrained to said support means and provided with means (15,15a) able to co-operate with associated means (20) for actuating the opening/closing movement of the said gripping means (10).

## Description

The present invention relates to an apparatus for gripping/holding parisons for blow-moulding machines and to an associated machine provided with this apparatus.

It is known in the technical sector relating to the packaging of liquid products and the like that there exists the need to manufacture containers made of plastic material suitable for this purpose.

It is also known that said containers are formed in suitable apparatus where a predefined quantity of extruded plastic material is injected into a mould and is then subjected to a first mechanical moulding deformation in order to obtain a so-called "parison" which is subsequently subjected to a thermal conditioning process and to a blowing operation in order to obtain the final shape of the container.

It is also known that said cycle may be divided into two separate steps performed on different machines for respectively manufacturing the "parisons" which are cooled and stored so as to be subsequently supplied to a different and separate machine in which final shaping of the container by means of blowing is performed.

One of the problems associated with this technology consists in the fact that the blowing machine must have means for removing the parisons entering the said machine, means for holding the parisons in order to transport them during the whole processing cycle and means for releasing the parison at the end of said cycle.

The technical problem which is posed, therefore, is that of providing an apparatus for gripping, holding and releasing parisons for plastic containers, in particular for blow-moulding machines, which are easy and inexpensive to produce and able to perform the three operations automatically.

Within the scope of this problem a further requirement is that the apparatus should be formed by a small number of parts which can be easily assembled and disassembled for the normal maintenance operations.

These technical problems are solved according to the present invention by an apparatus for gripping/holding parisons for blow-moulding machines, comprising support means which can be connected to the devices for transporting the parisons, inside the machine and movable therewith, and means for gripping the neck of the parison which are constrained to said support means and provided with' means able to co-operate with associated devices for actuating the opening/closing movement of the said gripping means.

Further details may be obtained from the following description of a non-limiting example of embodiment of the invention, provided with reference to the accompanying plates of drawings in which:
- Figure 1 shows an exploded view of only the means for gripping the parisons;
- Figure 2 shows a schematic section along a vertical plane of the apparatus for gripping/holding parisons according to the present invention during entry of the parison;
- Figure 3 shows a section similar to that of Fig. 2 during gripping of the parison; and
- Figure 4 shows a secrtion similar to that of Fig. 2 during release of the moulded container.

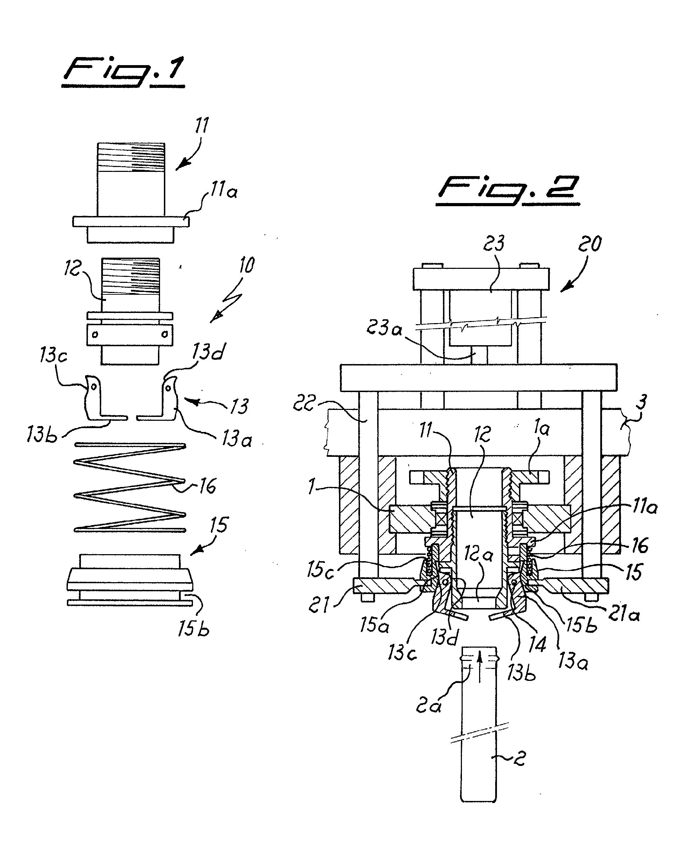

As illustrated, the apparatus according to the invention comprises gripping means 10 which are inserted in an element 1 for transporting the parisons 2 inside the moulding machine, which is only schematically shown with a frame part 3, and fixed actuating means 20 arranged on the machine 3 in the area of the station for entry of the parisons 2 (Fig. 2) and the station for unloading the moulded container 2b (Fig. 4).

In greater detail, said gripping means 10 comprise a sleeve 11 inserted inside said transportation element 1, which in a preferred embodiment is substantially flat, until an end-of-travel rim 11a comes into contact against the bottom side of the surface 1.

A toothed wheel 1a is mounted on the top part of the sleeve and is able to engage with a chain (not shown) forming part of the machine transportation mechanisms.

An interchangeable coaxial tube 12 is inserted inside the sleeve 11, on the bottom side thereof with respect the surface 1, said tube having the internal section of its bottom portion 12a corresponding to the shape and dimensions of the neck 2a of the parison 2.

The external circumference of said bottom part 12a of the sleeve 12 is designed to engage with circular annular segments 13 which have a substantially L-shaped cross-section (Fig. 2) with the vertical branch forming the arm 13a of jaws 13b of a gripper. Said annular segments 13 are pivotably mounted on associated gudgeons 14 about which they are able to rotate.

The arm 13a has two opposite rounded surfaces 13c,13d, i.e. a convex internal surface and a concave external surface, in order to produce the rotational opening/closing movement of the jaws 13b, as will appear more clearly below.

Coaxially with the annular segments 13 and on the outside thereof there is mounted a ring nut 15 which has:
- an edge with a convex circumferential surface 15a for engagement with the actuating means 20;
- a bottom radial seat 15b designed to engage with the actuating means 20 and
- an upper annular seat 15c inside which one end of an opposition spring 16 is coaxially inserted, said spring reacting with its opposite end against a flange 11b of the sleeve 11 in the sense of an outwards (downwards) thurst of the ring nut 15 so as to keep the gripper normally closed.

The said actuating means 20 comprise arms 21, a free end 21b of which is designed to be inserted inside said radial seat 15b of the ring nut 15, while the other end 21a is joined to a support frame 22 in turn connected to the rod 23a of a fixed actuating cylinder 23.

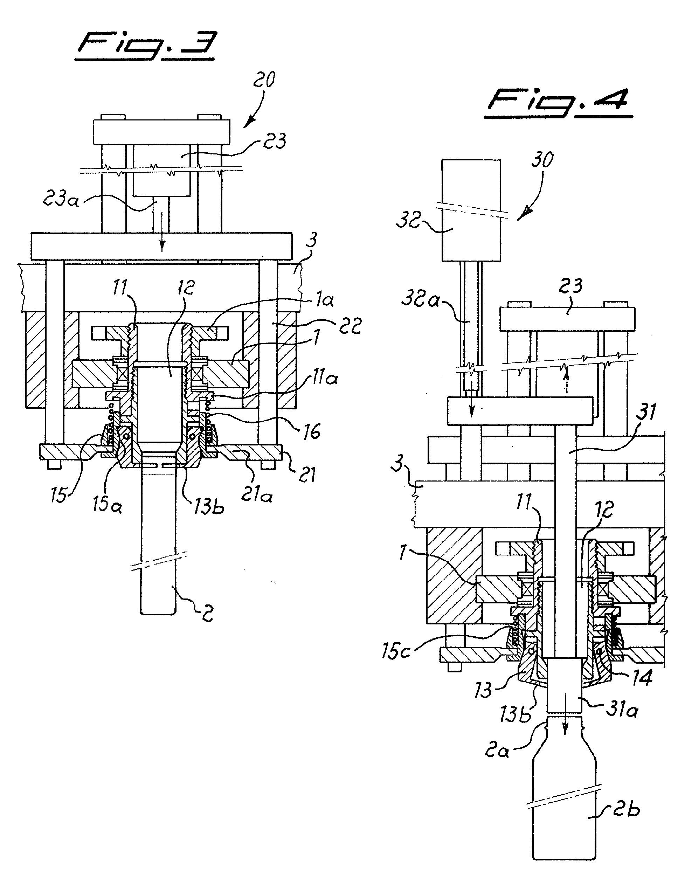

With reference to Figures 2, 3 and 4, the operating principle of the apparatus is as follows:
- once the support 1 has arrived at the station for entry of the parisons 2 (Fig. 2), transported by the transportation means 1a connected to a chain;
- the annular seat 15b of the ring nut 15 engages with the free end 21b of the arms 21;
- the cylinder 23 is actuated so that the rod 23a causes retraction of the frame 22 and therefore raising of the arms 21 and the ring nut 15;
- which, acting with its convex surface 15a on the corresponding concave surface 13c of the arms 13a of the jaws 13b;
- causes rotation, in an anti-clockwise direction, of the annular segments and therefore opening of the gripper which allows insertion of the neck 2a of the parison onto the corresponding end 12a of the internal coaxial tube 12;
- once the parison has been positioned, the cylinder 23 is actuated in the opposite direction so as to cause lowering of the arms 21 and the ring nut 15 with consequent closing of the gripper which, when it has left the loading station, is kept closed by the thrusting action of the spring 16.

When the cycle for blowing of the container 2b has been completed, the gripping means reach the unloading station where the annular seat 15b of the ring nut engages again with corresponding arms 21 which are actuated upwards so as to cause opening of the gripper and consequent dropping of the container 2b into the exit duct.

As shown in Fig. 4, in a preferred embodiment, the apparatus arranged in the area of the unloading station may also comprise auxiliary means 30 able to favour dropping of the container 2b.

Said auxiliary means consist of a plunger 31 integral with the free end of the rod 32a of an actuating cylinders 32. The punch 31 is coaxial with the sleeve 11 inside/from which it is able to enter/exit in order to ensure correct alignment of the neck 2a of the container 2b with the axis of the gripping devices so that, once the gripper has been opened, the container is able to fall freely by means of gravity.

By suitably forming the free end 31a of the plunger 31, it is nevertheless possible to envisage that the plunger may also exert a thrust for expulsion of the neck of the container, thus ensuring efficient dropping of the latter.

It is therefore obvious how the apparatus according to the invention allows reliable gripping/release of the parisons during the machine cycle and also holding thereof with the neck - and therefore the opening - arranged above instead of below, this being important for insertion of elements for conditioning the parisons before blowing thereof.

## Claims

1. Apparatus gripping/holding parisons (2,2a) for blow-moulding machines (3), **characterized in** it comprises:
- support means (1) which can be connected to the devices for transporting the parisons, inside the machine and movable therewith;
- means (10) for gripping the neck (2a) of the parison (2), constrained to said support means and provided with means (15,15a) able to co-operate with associated devices (20) for actuating the opening/closing movement of the said gripping means (10).

2. Apparatus according to Claim 1, **characterized in that** said gripping means (10) comprise a sleeve (11) which is inserted in said transportation element (1) and which has, integrally joined thereto, means (12) for engagement with the transportation devices of the machine and a plurality of annular segments (13) which have a substantially L-shaped cross-section with a vertical branch forming the arm (13a) of jaws (13b) of a gripper.

3. Apparatus according to Claim 2, **characterized in that** said means for engagement with the transportation devices of the machine consist of a toothed wheel (12).

4. Apparatus according to Claim 2, **characterized in that** said annular segments (13) are pivotably mounted on tangential gudgeons (14) about which they are able to rotate.

5. Apparatus according to Claim 2, **characterized in that** said arms (13a) have two opposite rounded surfaces (13c,13d), i.e. a concave external surface (13c) and convex internal surface (13d), in order to determine the opening/closing movement of the jaws (13b).

6. Apparatus according to Claim 5, **characterized in that** said concave external surface (13c) of the arms (13b) is able to co-operate with the convex circumferential surface (15a) of a ring nut (15) coaxially mounted on the sleeve (11) and sliding thereon in the axial direction upon operation of said actuation means (20).

7. Apparatus according to Claim 6, **characterized in that** said ring nut has a bottom radial seat (15b) designed to engage with the actuation means (20) and an upper annular seat (15c) inside which one end of an opposition spring (16) is inserted, the opposite end thereof reacting against a flange (11b) of the sleeve (11) in. the sense of an outward thrust of the ring nut (15) so as to keep the gripper normally closed.

8. Apparatus according to Claim 1, **characterized in that** said support element (1) is substantially flat.

9. Apparatus according to Claim 1, **characterized in that** a coaxial tube (12) which has the internal section of its bottom portion (12a) corresponding to the shape and dimensions of the neck (2a) of the parison (2) is provided inside the sleeve (11).

10. Apparatus according to Claim 1, **characterized in that** said gripping means (10) are able to grip the parison (2) with the neck (2a) arranged above the bottom thereof.

11. Apparatus according to Claim 1, **characterized in that** it comprises auxiliary means (31) for alignment of the moulded container (2b) with the axis of the gripping means so as to facilitate falling, by means of gravity, of the said container during release.

12. Apparatus according to Claim 11, **characterized in that** said auxiliary alignment means (31) consists of a coaxial rod movable upon actuation of associated means (32,32a) from a position extracted from the neck (2a) of the container (2b) to a position inserted inside said neck.

13. Apparatus according to Claim 12, **characterized in that** said coaxial rod (31) has at its free end a plunger (31a) able to exert a thrust on the container for expulsion thereof.

14. Apparatus according to Claim 12, **characterized in that** said means for actuating the container alignment means consist of the rod (32a) of a fixed cylinder (32).

15. Machine for blow-moulding plastic containers (2b) from parisons (2,2a) comprising at least station for loading the parisons, at least one blowing station, at least one station for unloading the moulded containers (2b), means (10) for gripping/holding the parisons (2) and means for transporting the gripping means (10) through the various stations, **characterized in that** said gripping means comprise:
- support means (1) which can be connected to the devices for transporting the parisons, inside the machine and movable therewith inside the latter;
- means (10) for gripping the neck (2a) of the parison (2), which are constrained to said support means and provided with means (15,15a) able to co-operate with associated devices (20) for actuating the opening/closing movement of the said gripping means (10), said actuating means being fixed to the machine in the area of at least the station for entry of the parisons (2) and the station for unloading the moulded containers (2b).

16. Machine according to Claim 1, **characterized in that** said gripping means (10) comprise a sleeve (11) which is inserted in said transportation element (1) and which has, integral therewith, means (12) for engagement with the transportation devices of the machine and annular segments (13) which have a substantially L-shaped section with the vertical branch forming the arm (13a) of jaws (13b) of a gripper.

17. Machine according to Claim 16, **characterized in that** said means for engagement with the transportation devices of the machine consist of a toothed wheel (12).

18. Apparatus according to Claim 16, **characterized in that** said annular segments (13) are pivotably mounted on gudgeons (14).

19. Machine according to Claim 16, **characterized in that** said arms (13a) have two opposite rounded surfaces (13c,13d), i.e. a concave external surface (13c) and convex internal surface (13d), for producing the rotational opening/closing movement of the jaws (13b).

20. Machine according to Claim 19, **characterized in that** said external concave surface (13c) of the arms (13b) is designed to co-operate with the convex circumferential surface (15a) of a ring nut (15) which is coaxially mounted on the sleeve (11) and slidable thereon in an axial direction upon operation of said actuating means (20).

21. Machine according to Claim 20, **characterized in that** said ring nut (15) has a bottom radial seat (15b) designed to engage with the actuating means (20) and an upper annular seat (15c) inside which one end of an opposition spring (16) is coaxially inserted, the opposite end reacting against a flange (11b) of the sleeve (11) in the sense of an outwards thrust of the ring nut (15) in order to keep the gripper normally closed.

22. Machine according to Claim 1, **characterized in that**, in a preferred embodiment, said support element (1) is substantially flat.

23. Machine according to Claim 15, **characterized in that** the sleeve (11) is provided internally with a coaxial tube (12) which has an internal section of its bottom portion (12a) corresponding to the shape and dimensions of the neck (2a) of the parison (2).

24. Machine according to Claim 15, **characterized in that** said gripping means are able to grip the parison (2) with the neck (2a) arranged above the bottom thereof.

25. Machine according to Claim 15, **characterized in that** said means (20) for actuating the opening/closing movement of the gripping means (10) consist of arms (21), one end (21a) of which is designed to engage with the radial groove (15a) of the ring nut (15) and the other end of which is joined to a frame movable upon actuation of associated operating means (23,23a).

26. Machine according to Claim 25, **characterized in that** said operating means consist of the rod (23a) of a cylinder (23) fixed to the machine.

27. Machine according to Claim 15, **characterized in that** it comprises auxiliary means (31) for alignment of the moulded container (2b) with the axis of gripping means in order to facilitate falling, by means of gravity, of the container during release.

28. Machine according to Claim 27, **characterized in that** said auxiliary alignment means (31) consist of a coaxial rod movable upon actuation of associated means (32,32a) from a position extracted from the neck (2a) of the container (2b) to a position inserted in said neck.

29. Machine according to Claim 28, **characterized in that** said coaxial rod (31) has at its free end a plunger (31a) able to exert a thrust on the container for expulsion thereof.

30. Machine according to Claim 28, **characterized in that** said means for actuation of the container alignment means consist of the rod (32a) of a cylinder (32) fixed to the machine in the area of the container unloading station.
